# EUROPEAN PATENT APPLICATION

(11) **EP 4 592 481 A1**
(43) Date of publication of application: **30.07.2025**
(21) Application number: 24154506.0
(22) Date of filing: 29.01.2024
(51) Int. Cl.: E05B 77/12, E05B 79/06, E05B 79/20, E05B 81/76, E05B 81/86, E05B 81/90, E05B 85/10

(54) **SAFETY DEVICE FOR A VEHICLE DOOR HANDLE ASSEMBLY**

(71) Applicant: MINEBEA ACCESSSOLUTIONS ITALIA S.P.A., 10044 Pianezza (IT)
(72) Inventor: PIERI, Alexandre, 10044 Pianezza (IT); FRATTINI, Massimo, 10044 PIANEZZA (IT); ROCCI, Antonio, 10044 PIANEZZA (IT)
(74) Representative: Germain Maureau

(57) **Abstract**

The invention relates to a safety device (1) for a vehicle door handle assembly, comprising:
- a support (10) configured to be fixed to a pillar of a vehicle door,
- a door handle structure configured to move with respect to the support (10) between a rest handle position and an active handle position allowing the opening of the door vehicle,
- a blocking element (12) configured to move with respect to the support (10) between a blocking position in which the blocking element (12) prevents the door handle structure from moving with respect to the support (10), and an emergency position in which the blocking element allows the door handle structure (11) to move with respect to the support (10) from the rest handle position to the active handle position, for example when the door handle structure (11) is subject to a pulling or pushing strain,
wherein the blocking element comprises first guiding means configured to cooperate with complementary first guiding means of the support (10) to allow a translation movement of the blocking element with respect to the support (10) along a translation axis.

## Description

### Introduction

The invention relates to a vehicle door handle assembly, in particular in the case of automated door latches that are controlled via electric means, as well as vehicle comprising such safety device.

Without being limited thereto, the invention particularly applies to the vehicle wing-type door handles.

### State of the art

Automated door latches selectively lock or release vehicle door panels in an automated fashion. By automated door latches are herein designated door latches provided with a a sensor configured to detect a user's hand for opening the door latch. Once the door panel is released, the user or an electric panel actuator swings or slides the panel to grant physical access to the vehicle.

However, in such electrical system, problems may arise when the doors cannot be electrically opened anymore, particularly in case of a crash accident or because of an empty vehicle battery.

To try to remedy to this issue, it is possible to provide a handle arrangement where a rotatable transmission lever connected to a handle element is locked into rotation by a safety system when the handle element is operated with a force below a predetermined threshold. Consequently, if the user operates the handle element with a force below the predetermined threshold, they activate the electrical opening system of the handle arrangement. If the user operates the handle element with a force above the predetermined threshold, they disengage the safety system of the handle arrangement.

However, this involves intricate rotational mechanical interactions among components, particularly between a reversibly deformable leg of a locking member cooperating with a cam on the mechanical part of the handle for release.

Moreover, while such a safety system may be suitable for a traditional handle, it cannot be seamlessly integrated into any handle, for example into a wing-type door handle.

Wing-type door handles have gained popularity due to their distinctive appearance and enhanced functionality, offering an easier grip for drivers and passengers. However, smaller wing-type door handles can pose challenges when it comes to incorporating mechanical components, such as the integration of a handle safety system as described above.

As a result, the objective of the present invention is to provide a safety system for a vehicle door handle assembly that is simpler to design and integrate in a handle.

In particular, an objective of the present invention is to provide a safety system for a vehicle door handle assembly which can be integrated with a door handle assembly of the wing-type handle, and preferably with any type of handle assembly.

To this end, the invention relates to a safety device for a vehicle door handle assembly, the safety device comprising:
- a support configured to be fixed to a pillar of the door vehicle,
- a door handle structure configured to move with respect to the support between a rest handle position and an active handle position allowing the opening of a door panel of the vehicle,
- a blocking element configured to move with respect to the support between a blocking position in which the blocking element prevents the door handle structure from moving with respect to the support, and an emergency position in which the blocking element allows the door handle structure to move with respect to the support from the rest handle position to the active handle position, for example when the door handle structure is subject to a pulling or pushing strain,
wherein the blocking element comprises first guiding means configured to cooperate with complementary first guiding means of the support to allow a translation movement of the blocking element with respect to the support along a translation axis.

Thanks to the safety device according to the invention, it is possible to provide a locking of the door handle structure that does not require rotating elements for this purpose, as in those known from the prior art.

Although the invention is not limited thereto, it finds a particular application in wing-type door handles. Indeed, the cooperation of the guiding means of the blocking element with those of the guiding means of the support to define a translational movement allows for simplified mechanical connections to be integrated with a wing-type door handle.

According to various features of the invention, which can be taken individually or in combination with each other, the invention may include the following features:
- the safety device is configured to be electrically activated,
- the blocking element comprises at least one element, for example at least one longitudinal element, for example a first longitudinal element and a second longitudinal element, arranged to cooperate with the door handle structure only in the blocking position to prevent the movement of the door handle structure in the blocking position, for example with respect to the support,
- more particularly, the blocking element comprises the at least one longitudinal element, said first longitudinal element; and another longitudinal element, said second longitudinal element, arranged to cooperate with the support in the blocking position or in the emergency position while cooperating with the door handle structure in the blocking position,
- the blocking element comprises the first longitudinal element; and the second longitudinal element,
- the support comprises at least two portions, each portion having a surface extending in a plan, the surface presenting receiving means each intended to cooperate with a respective of the longitudinal elements, the plans being different from each other,
- at least one longitudinal element has a shape that tapers down to an end thereof, for example its end,
- the safety device comprises an activation element configured to activate the blocking element, and being moveable between a non-active position and an active position, the blocking element is configured to cooperate with the activation element so that when the activation element moves from the non-active position to the active position, the blocking element moves from the blocking position to the emergency position,
- the blocking element comprises elastic means cooperating with the support to maintain the blocking element in the blocking position when the activation element is in the non-active position,
- the activation element is configured to rotate around an activation axis, for example the activation axis forming with the translation axis an angle comprised between 70 and 110 degrees, for example 90 degrees, so that the activation axis is orthogonal to the translation axis,
- the activation element is configured to be activated by electronic means,
- the door handle structure comprises second guiding means configured to cooperate with complementary second guiding means of the support to allow a rotation movement of the door handle structure with respect to the support,
- the second guiding means of the door handle structure comprise slots and the complementary second guiding means of the support comprise guiding pins, each guiding pin cooperating with one of the said slots, for example each guiding pin extending at least partially within one of the said slots,
- wherein the support comprises arms, each arm supporting one of the said guiding pins,
- the slots of the second guiding means have a curved shape,
- the slots are designed, for example the ratio of the length of a first of the slots and of the length of a second of the slots is defined, so as to allow the rotation movement of the door handle structure with respect to the support and/or so as to allow a movement of an actuating element of the door handle assembly, for example of the door handle as defined hereafter, for example so that the actuating element can cooperate with an activation lever, for example with a control cam of the activation lever, for example so as to open the door panel,

In another aspect, the invention relates to a vehicle door handle assembly, for example comprising a pillar, for example the pillar, of the door vehicle and a safety device according to the invention, wherein the safety device is for example attached to the pillar of the door vehicle, preferably to the pillar is a B-pillar.

The vehicle door handle assembly can comprise a door handle, the door handle can comprise the door handle structure and sensing means, the sensing means comprising for example one or more sensor(s), the vehicle door handle assembly being configured such that detection of a hand of a user by the sensing means, for example of the hand of the user touching the door handle, triggers the opening and/or unlocking and/or locking of the door, for example electrically or in an automated fashion.

In another aspect, the invention relates a vehicle comprising such a vehicle door handle assembly.

The present invention will be described with reference to the accompanying drawings, which are provided for illustrative purposes and should not be construed as limiting the scope of the invention. The drawings illustrate particular examples of the invention, but other embodiments are possible without departing from the spirit of the invention as claimed. The same or similar elements may be designated by different reference numerals in the different figures.

### Description of the drawings

Figure 1 depicts a perspective view of the safety device for a vehicle door handle assembly according to an example of an embodiment of the invention shown in a blocking position, comprising a support.
Figure 2 depicts a perspective view of the safety device shown in Figure 1, where a door handle structure of the handle is represented.
Figure 3 depicts a perspective view of the safety device shown in Figure 1, where a blocking element of the safety device is represented in relation with the support.
Figure 4 depicts an enlargement of the support of the safety device of Figure 1.
Figure 5 depicts the blocking element of the safety device of Figure 1 in more details.
Figure 6 depicts a fixed bar of the support of the safety device of Figure 1 in more details.
Figure 7 depicts a top view of the safety device of Figure 1 without the blocking element.
Figure 8 depicts the blocking element in a blocking position, a fixed plate of the support, and a moveable plate of the door handle structure of the safety device of Figure 1.
Figure 9 depicts the elements of Figure 8 representing the blocking element in an emergency position.
Figure 10 depicts a vehicle door handle assembly according to an example of embodiment of the invention, and in particular the attachment of the safety device of Figure 1 to a vehicle door pillar.
Figure 11 depicts a perspective view of the safety device of Figure 1, shown in an emergency position.
Figure 12 depicts a rear view of the door handle assembly of Figure 1.
Figure 13 depicts a perspective view of the shell of a handle of the door handle assembly of Figure 12.
Figure 14 depicts a perspective view of the activation lever of the door handle assembly of Figure 12.
Figure 15 depicts a view of the door handle assembly including a rod or lever and an actuator.
Figure 16 depicts a rear view of the door handle assembly of Figure 12 in an emergency position.

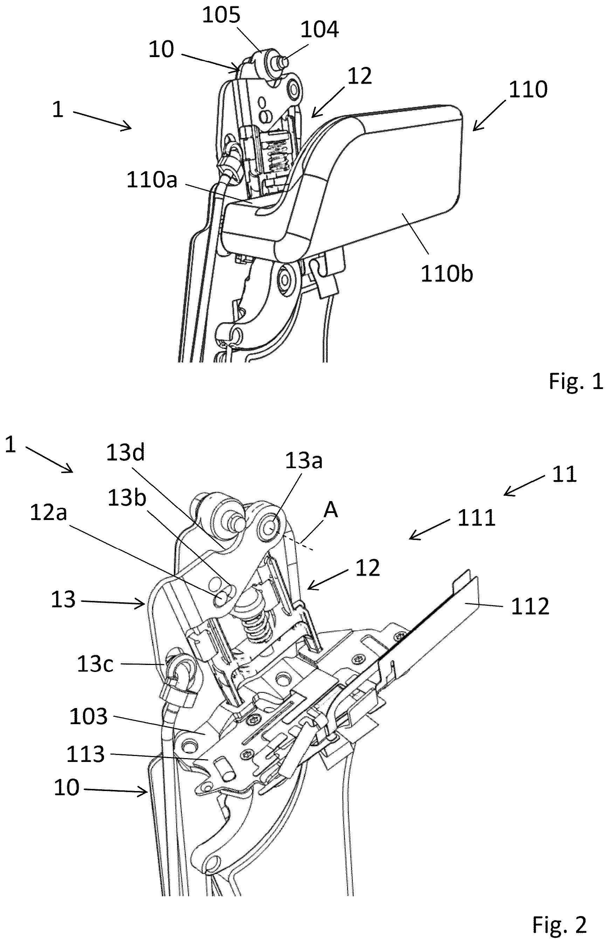

With reference to Figures 1 to 11, and in particular to Figures 1 and 2, a safety device 1, for example for a vehicle door handle assembly 100, the vehicle door handle assembly, a vehicle door 400, and a vehicle 3 comprising the vehicle door handle assembly are depicted. In Figures 1 and 2, the safety device 1 for the vehicle door handle assembly 100 is depicted. The safety device 1 comprises a support 10, a door handle structure 11 of a door handle 110, a blocking element 12. The safety device can comprise an activation element 13.

The support 10 is for example configured to be fixed to a pillar 200 of the vehicle door 400. The vehicle door 400 can comprise a vehicle door panel 30.

The door handle structure 11 is configured to move with respect to the support 10 between a rest handle position and an active handle position allowing the opening of the door vehicle.

The blocking element 12 configured to move with respect to the support 10 between a blocking position in which the blocking element 12 prevents the door handle structure 11 from moving with respect to the support 10, and an emergency position in which the blocking element 12 allows the door handle structure 11 to move with respect to the support 10 from the rest handle position to the active handle position, for example when the door handle structure 11 is subject to a pulling or pushing strain.

The blocking element 12 comprises first guiding means 121a, 121b configured to cooperate with complementary first guiding means 101 of the support 10 to allow a translation movement of the blocking element (12) with respect to the support (10) along a translation axis (T).

The vehicle door handle assembly 100 can comprise the door handle 110, the door handle 110 comprising the door handle structure 11.

The vehicle can comprise one or several such vehicle door handle assembly(ies). The vehicle can comprise one or more door(s). One of, or each of, the door(s) can comprise such a vehicle door handle assembly.

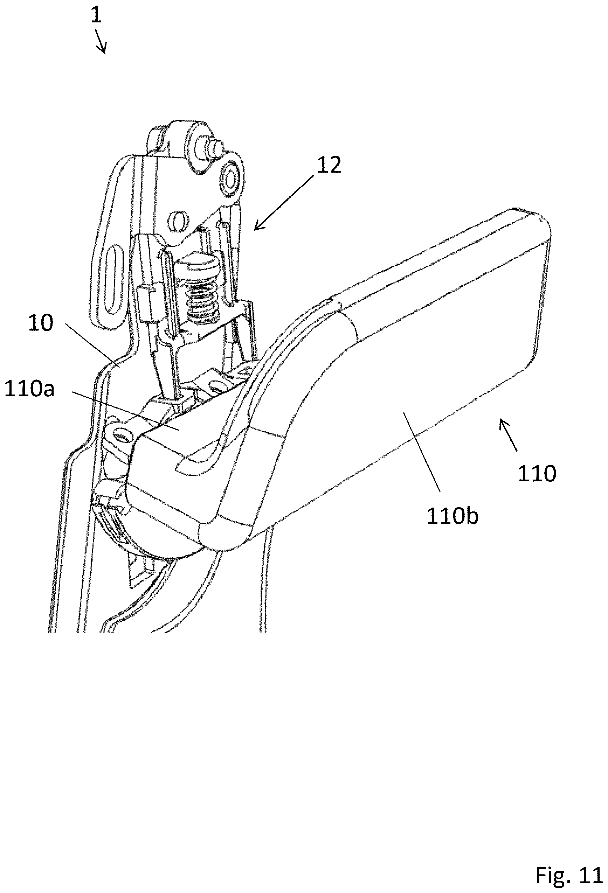

While Figure 1 shows the safety device, and in particular the blocking element 12, in a blocking position, Figure 11 shows the safety device, and in particular the blocking element, in an emergency position. Such positions will be described in relation with the support 10, the door handle structure 11 of the door handle 110, the blocking element 12, and for example the activation element 13.

When the vehicle door handle assembly 100, for example the door handle, is in normal operation, the safety device, and in particular the blocking element 12, is in a blocking position. When the normal operation is not available, for example in a degraded state, for example in a broken state, the safety device, and in particular the blocking element 12, can be in a blocking position and can be suitable to switch from the blocking position to the emergency position.

The safety device 1 can be configured to be electrically activated so that the blocking element 12 is controlled between the blocking position and the emergency position.

The vehicle door handle assembly 100, for example the door handle 110, can be an automated handle or handle assembly, for example of the e-handle type, for example of the electronic handle type, which is designed to electronically unlock the door, in normal operation.

The door handle assembly 100 can include an automated door latch, for example controlled by electric means, for example in normal operation. The door handle assembly 100 can be configured to lock or release the vehicle door panel 30 in an automated fashion.

The door handle 110 can comprise sensing means, the sensing means comprising for example one or more sensor(s). The vehicle door handle assembly 1 can be configured such that detection of a hand of a user by the sensing means, for example of the hand of the user touching the door handle, triggers the opening and/or unlocking and/or locking of the door.

In normal operation, for example in a normal mode, the door handle can be in a blocked position, for example wherein the blocking element 12 prevents the door handle structure 11 from moving with respect to the support 10. In such position, the door handle 110 is a fixed element and does not transmit any mechanical impulse to the lock. In this case, an electric latch of the door is activated by one or some sensor(s) in the handle, which are triggered by the user touching the handle itself. The possibility of a mechanical impulse is for example only for emergencies, for example in degraded state, and the emergency position can therefore correspond to an emergency mode.

The door handle 110 can comprise a shell, the shell comprising for example an upper shell 110a and a lower shell 110b, enclosing an internal structure 111 of the door handle structure 11, for example between them, as shown in Figure 2. The internal structure 111 can comprise a plate 112, for example a curved plate, fixed to a mobile plate 113. The curved plate 112 can be designed to reinforce the door handle 110. The mobile plate 113 can be fixed to the plate 112.

The mobile plate 113 can be configured to allow the door handle structure 11 to move with respect to the support 10 between a rest handle position and an active handle position allowing the opening of a door vehicle 400, for example mechanically, for example by pushing and/or pulling of the door handle structure 11 and/or door handle 110 by the user, for example by the user's hand.

The support 10 can be configured to be fixed to the pillar 200 of the vehicle door 30 by means of fixation 104. Without being limited thereto, the pillar 200 of the door vehicle is a B-pillar and/or a C-pillar. When fixed to the pillar 200 of the vehicle door 30, the support 10 cannot move relative to the pillar 200.

The activation element 13 can comprise or consist in an activation lever 13 configured to rotate around an activation axis A, for example around an activation pin 13a defining the activation axis A. The activation pin 13a can be fixed to the support 10. The activation element 13 can be moveable between a non-active position and an active position.

The blocking element 12 is configured to move with respect to the support 10 between the blocking position in which the blocking element 12 prevents the door handle structure 11 from moving with respect to the support 10, and the emergency position in which the blocking element 12 allows the door handle structure 11 to move with respect to the support 10 from the rest handle position to the active handle position, for example when the door handle structure (11) is subject to a constraint, for example a pulling or pushing strain, for example by the user, for example by the user's hand.

The blocking element 12 can comprise a blocking pin 12a configured to cooperate with an opening 13b, for example an oblong opening 13b, of the activation element 13 so that the blocking element 12 cooperates with the activation element 13. The blocking pin 12a can extend at least partially within the opening 13b.

Further, the blocking element 12 comprises the first guiding means 121a, 121b configured to cooperate with complementary guiding means 101 of the support 10 to allow a translation movement of the blocking element 12 with respect to the support 10 along a translation axis T.

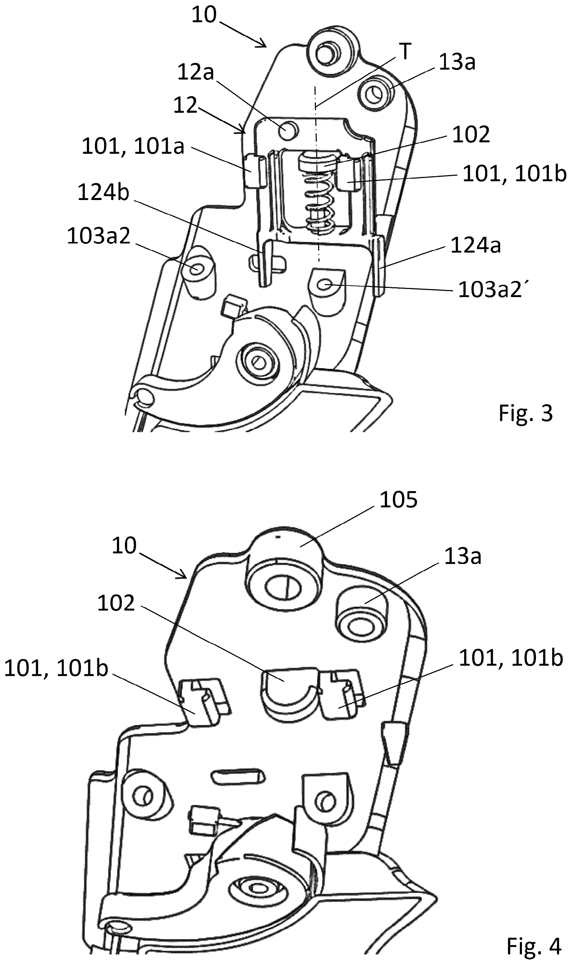

In Figure 3, the blocking element 12 is represented in cooperation with the support 10. The guiding means 121a, 121b of the blocking element 12 can comprise, or be formed by, two guiding members 121a, 121b, for example two lateral profiles 121a, 121b. The two lateral profiles 121a, 121b can extend from, for example protrude from, a same face of the blocking element 12. The two lateral profiles 121a, 121b can be parallel to each other.

The two lateral profiles 121a, 121b can be configured to cooperate with fastening lugs 101a, 101b of the support 10. The fastening lugs 101a, 101b can have a hook shape, for example an "L" shape (Figure 4), in a manner allowing the retention of the lateral profiles 121a, 121b of the locking element against the support 10. The cooperation of the lateral profiles 121a, 121b with the fastening lugs 101a, 101b allows the translation movement of the blocking element 12 with respect to the support 10 along the translation axis T. At least one the fastening lugs 101a, 101b, for example each of the fastening lugs 101a, 101b, can extend from a same face of the support 10, for example the same face configured to be positioned against the blocking element 12. At least one the fastening lugs 101a, 101b, for example each of the fastening lugs 101a, 101b, can have a first portion extending away from the same face of the support 10, and a second portion, extending from a distal end of the first portion, for example in a direction that differs from the direction of extension of the first portion, for example according to a direction that is parallel to the same face of the support, the direction and sense of extension of the second portions being for example the same for both second portions.

Further, the blocking element 12 can comprise elastic means 122 cooperating with the support 10 to maintain the blocking element 12 in the blocking position when the activation element 13 is in the non-active position. The elastic means 122 can include or form a spring, for example a coil spring. The elastic means 122 can be configured to be compressed and/or to exert a resisting force against a compression in a compression direction that is for example the same as a direction according to which at least one, for example the two, lateral profiles 121a, 121b, extend.

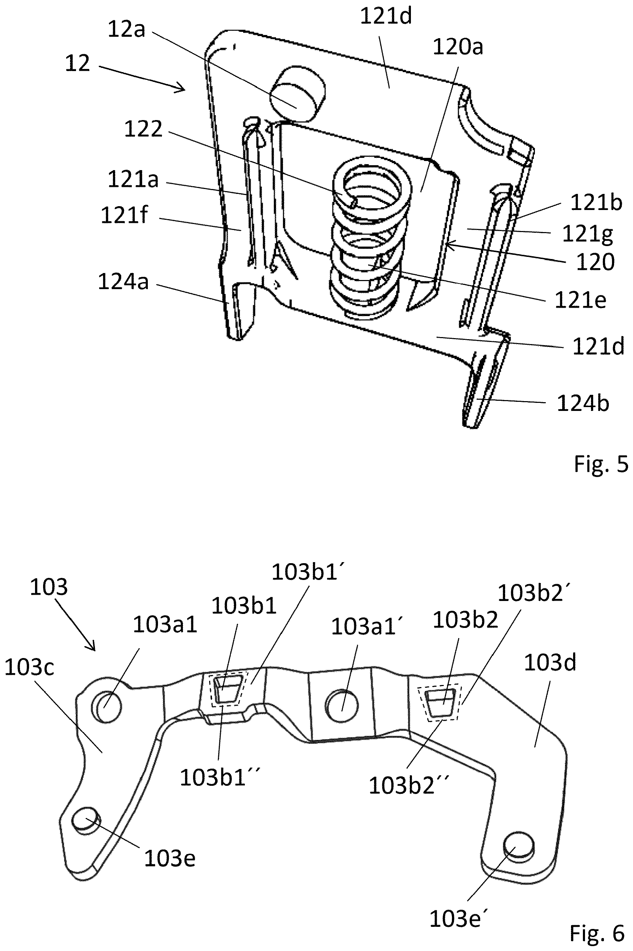

As shown in Figures 3 or 5, the blocking element 12 can comprise a frame 120, with an opening 120a bounded laterally by two lateral frame parts 121f, 121g of the open frame 120. The two lateral profiles 121a, 121b are for example extending from the two lateral frame parts 121f, 121g respectively.

The opening 120a can be bounded by an upper profile 121c of the frame 120, for example the blocking pin 12a extending from the upper profile 121c. The upper profile 121c is for example connecting the two lateral profiles 121a, 121b, for example upper ends of the lateral profiles 121a, 121b. The opening can be bounded by a lower profile 121d of the frame 120. Longitudinal elements 124a, 124b, as described hereafter, can extend from the lower profile 121d, for example extend away from the opening 120a, for example parallel to the two lateral profiles 121a, 121b. The upper profile can have a curved shape at an end thereof, for example a concave shape, complementary to a shape, for example a circular shape, of the activation pin 13a.

Wordings such as upper, lower, vertical, horizontal, top etc. are for example defined with respect to the position an element is configured to have when in position within the vehicle when the vehicle is in a position in normal operation. For example lower refers for example to en element relatively closer to the ground than a higher element when in position within the vehicle when the vehicle is in a position in normal operation.

Extending into the open frame 120 from the lower profile 121d is a projection 121e. The projection 121e is for example designed to at least partially support the elastic means 122, for example formed by the coil spring, for example designed to extend at least partially, for example completely within the elastic means 122. The projection can for example be configured to position the elastic means 122 and/or maintain the position and/or orientation of the elastic means 122. The projection can have the shape of a cylinder cut according to a plane parallel to the axis of the cylinder. The plane is for example orthogonal to the direction according to which the lower profile 121d extends.

The support 10 can further have a protrusion 102 designed for retaining the elastic means 122 in compression. The projection 121e can extend from the lower profile 121d, for example extend within the opening 120a, for example vertically, for example extend away from longitudinal elements 124a, 124b as described hereafter, for example parallel to the two lateral profiles 121a, 121b.

The cooperation between the blocking element 12 and the activation element 13 can allow the activation element 13 to control the movement of the blocking element 12 so that when the activation element 13 moves from the non-active position to the active position, the blocking element 12 moves from the blocking position to the emergency position.

Figures 1 and 2 illustrate the blocking element 12 in the blocking position.

In Figure 2, it is shown that the support 10 can include a fixing part, or fixing bar 103 attached to the support 10. The fixing bar 103 is represented in more details in Figure 6. The fixing bar 103 is fixed to the support 10 by fixing means, the fixing means comprising for example one or more opening(s) 103a1, 103a1' configured to cooperate with one ore more receiving opening(s) 103a2, 103a2' of the support 10 (shown Figure 3), for example respectively, for example by means of connection means of the safety device 1, for example one or more screw(s), for example respectively. The connection means may for example be inserted from one or more of the opening(s) 103a1, 103a1' of the fixing bar 103 to cooperate with the, for example each with the corresponding, receiving opening 103a2, 103a2' of the support 10.

The blocking element 12 can be designed to cooperate with the support 10. More precisely, the blocking element 12 can comprise at least one element, for example at least one longitudinal element 124a, 124b, for example two longitudinal elements 124a, 124b, for example a first longitudinal element (124a) and a second longitudinal element (124b). The at least one element can have a cross section in the shape of a trapezoid, for example in a plane orthogonal to the direction of extension of the corresponding element, for example a direction parallel to the lateral profiles 121f, 121g. The at least one element can have a cross section in another shape, for example a rectangular shape, for example in a plane orthogonal to the direction of extension of the corresponding element, for example a direction parallel to the lateral profiles 121f, 121g.The longitudinal elements 124a, 124b can be arranged to cooperate with the door handle structure 11, for example in the blocking position, for example only in the blocking position, for example to prevent the movement of the door handle structure 11 with respect to the support 10.

As depicted in Figure 6, the fixing bar 103 of the support 10 can include receiving means 103b1, 103b2 of the support 10 intended to cooperate with the element(s), for example the longitudinal element(s) 124a, 124b of the blocking element 12. The receiving means 103b1, 103b2 of the fixing bar 103 can be through hole(s) 103b1, 103b2. The through hole(s) 103b1, 103b2 have preferably a trapezoidal shape. The trapezoidal shape allows for the handle 110 and/or door handle structure 11 to have no play.

The through hole(s) 103b1, 103b2 can have a shape complementary to that of the longitudinal elements 124a, 124b of the blocking element 12, here a trapezoidal shape.

Alternatively, the through hole(s) 103b1, 103b2 can have a shape that is not complementary to that of the longitudinal elements 124a, 124b of the blocking element 12, although the through hole(s) 103b1, 103b2 have a shape that is cooperating with that of the longitudinal elements 124a, 124b of the blocking element 12. For example the through hole(s) 103b1, 103b2 can have a trapezoidal shape, while the longitudinal elements 124a, 124b of the blocking element 12 have a cross section in a different shape, for example a rectangular shape, for example in a plane orthogonal to the direction of extension of the corresponding element, for example a direction parallel to the lateral profiles 121f, 121g

The longitudinal elements 124a, 124b can have a shape that tapers down to its end, for example to an end thereof, for example to a distal end thereof. Thus, it is possible to make the longitudinal elements 124a, 124b of the blocking element 12 engaging progressively in cooperation with the receiving means 103b1, 103b2 of the support 10 until the cross section of the longitudinal elements 124a, 124b is retained by the receiving means 103b1, 103b2 of the support 10, which corresponds to the blocking element 12.

The longitudinal element(s) can extend between a proximal end and the distal end, for example the proximal end being closer to the lower profile 121d than the distal end.

The fixing bar 103 of the support 10 can comprise at least two portions 103b1', 103b2', each portion 103b1', 103b2' extending in a respective plan 103b1", 103b2", for example presenting the respective receiving means 103b1, 103b2, the plans 103b1', 103b2' being different from each other. In other words, the plans 103b1', 103b2' are not the same. Such portions 103b1', 103b2' of the fixing bar 103 can allow to have at least the longitudinal element 124a of the blocking element 12 arranged to cooperate with the door handle structure 11, for example in the blocking position, for example only in the blocking position, to prevent the movement of the door handle structure 11 with respect to the support 10, and for example the second longitudinal element 124b of the blocking element 12, arranged to cooperate with the support 10 in the blocking position or in the emergency position, for example while cooperating with the door handle structure 11 in the blocking position as described hereafter.

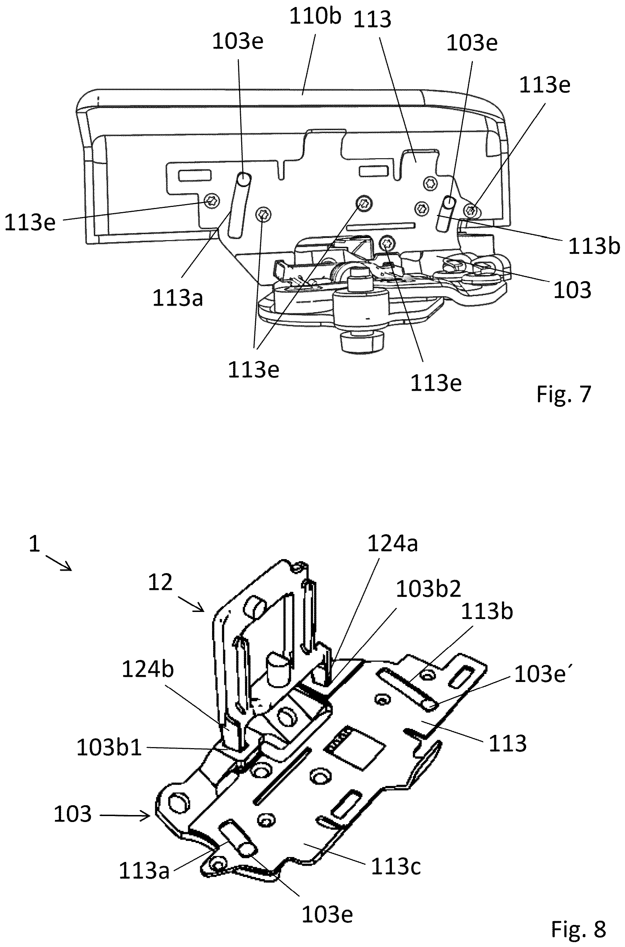

The fixing bar 103 can comprise two arms 103c, 103d. The portions 103b1' and 103b2' can extend between the two arms 103c, 103d along the fixing bar 103. At least one of the arms, for example each arm, 103c, 103d can support a guiding pin 103e, 103e' of the fixing bar 103. The guiding pins 103e, 103e' can extend from, for example protrude from, a same face of the fixing bar 103. As will be described hereafter, the guiding pins 103e can be configured to cooperate with the door handle structure 11 to allow the door handle structure 11 to move, for example relatively to the support 10 in the emergency position of the blocking element 12. As shown in Figure 7, the arms 103c, 103d can be mounted between the mobile plate 113 and the curved plate 112.

Figure 7 depicts a top view of the safety device 1 of Figure 1 without the blocking element 12. The door handle structure 11 is represented with the lower shell 110b fixed to the mobile plate 113.

The mobile plate 113 of the door handle structure 11 can comprise second guiding means 113a, 113b, for example one or more guiding element(s), 113a, 113b, for example linear guiding means or element(s), for example curved linear guiding means or element(s), for example slot(s), for example curved slot(s). The second guiding means 113a, 113b, for example one or more guiding element(s), 113a, 113b, can be configured to cooperate with complementary second guiding means, for example complementary guiding elements of the support 10, to allow a rotation movement of the door handle structure 11 with respect to the support 10.

The complementary second guiding means, for example complementary guiding elements, of the support 10 can comprise the arm(s) 103c, 103d of the fixing bar 103 and/or the guiding pin(s) 103e, 103e'. The guiding pins 103e can respectively cooperate with, for example be at least partially inserted in, the said second guiding means 113a, 113b, for example second guiding element(s), 113a, 113b.

As shown, the second guiding means 113a, 113b, for example the guiding element(s) 113a, 113b, for example linear guiding elements 113a, 113b, can have a curved shape to allow the guiding of the door handle structure 11 relative to the support 10 and induce a rotational movement of the door handle structure 11 relative to the support 10 when the door handle structure 11 is pulled.

Of course, it should be understood that pulling the door handle might be done only when the blocking element 12 is in the emergency position.

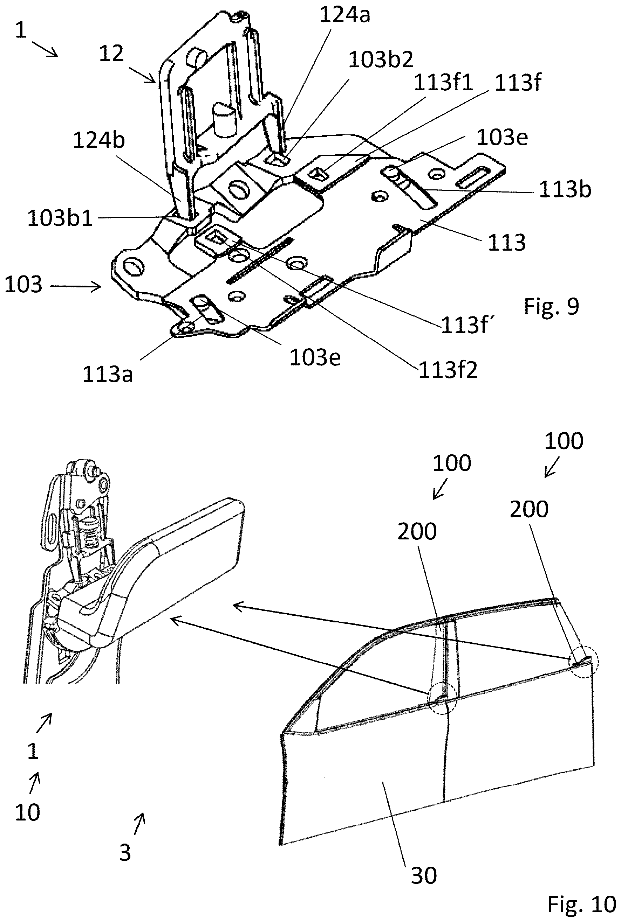

With reference to Figures 8 and 9, the mobile plate 113 can comprise a body 113c, the body 113c presenting for example the guiding elements 113a, 113b. The mobile plate 113 can comprise one or more portions 113f, 113f', for example two, extending from the body 113c of the mobile plate 113. Each of the extending portions 113f, 113f', presents a receiving means 113f1, 113f2, for example comprising an opening.

The longitudinal elements 124a, 124b can be designed to cooperate with the receiving means 113f1, 113f2 of the mobile plate 113 so as to prevent the movement of the door handle structure 11 with respect to the support 10.

Thus, the longitudinal elements 124a, 124b of the blocking element 12, for example after engaging the receiving means 103b1, 103b2, can engage, for example progressively, the receiving means 113f1, 113f2 of the mobile plate 113, for example until the cross section of the longitudinal elements 124a, 124b is retained by the receiving means 113f1, 113f2 of the mobile plate 113, which corresponds to the blocking element 12.

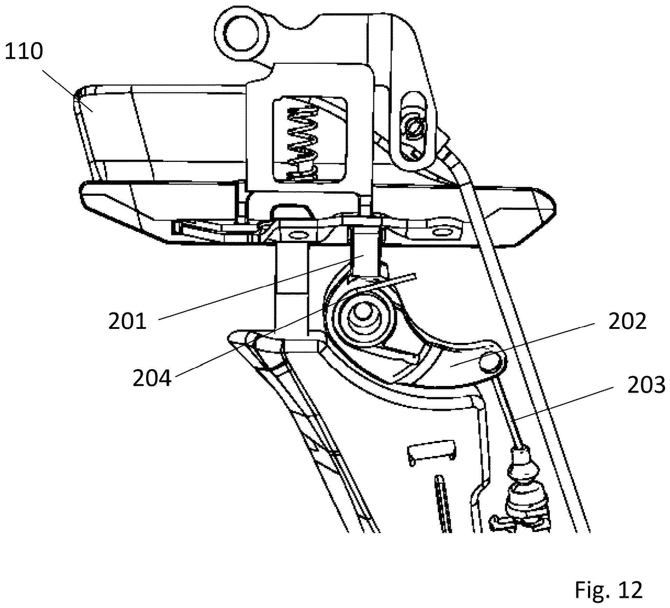

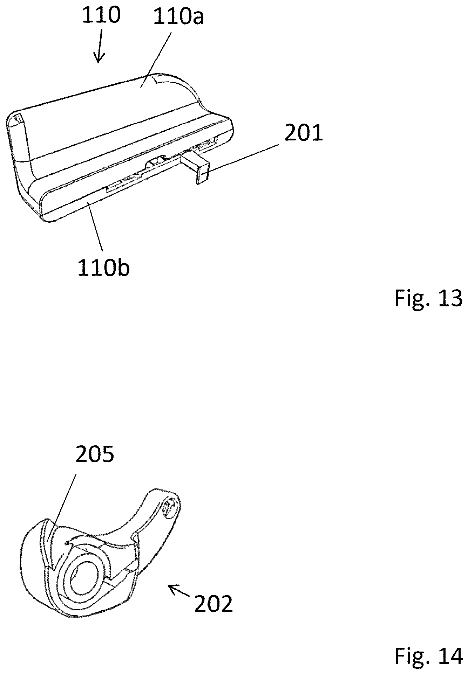

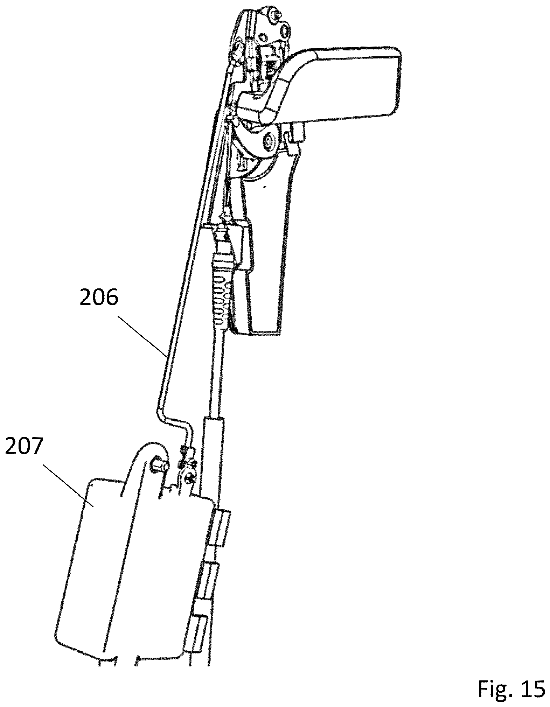

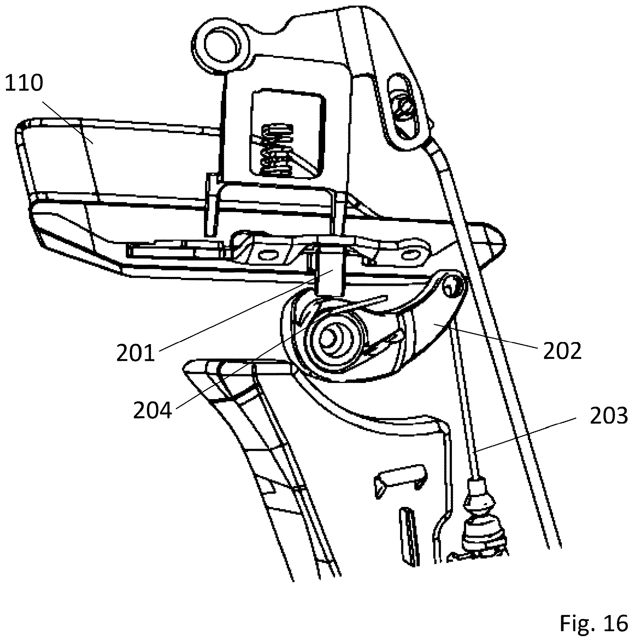

With reference to Figures 12 to 16, further elements relative to the operating of the vehicle door handle assembly are presented.

The door handle assembly 100, for example the door handle 110, can comprise an actuating element 201. The actuating element 201 can extend from the shell, for example from the lower shell 110b. The actuating element 201 can be hook-shaped. The actuating element 201 can include a first portion extending from the shell, for example horizontally, and a second portion extending from the first portion, for example extending towards the bottom.

The door handle assembly 100, for example the door handle 110, can comprise an activation lever 202 for a cable 203, and for example the cable 203, for example a Bowden cable. The actuating element 201 can be configured to be connected to and/or to cooperate with the activation lever 202 for the cable 203. The cable 203 can be connected to and/or cooperate to the door latch so as allow to open the door latch selectively.

The activation lever 202 can comprise an activation lever body. The body can be curved.

The activation lever 202 can comprise elastic means 204, for example a spring, cooperating with the activation lever. The elastic means 204 can be configured to exert a pushing force, on the activation lever body, for example in the direction of a normal position/non-activated position thereof, for example as illustrated on Figure 12.

The activation lever 202 can comprise a control cam 205. The control cam 205 can be located on the body. The control cam can be configured to interact with the actuating element 201.

The door handle assembly 100, for example the door handle 110, can comprise a rod or lever 206. The door handle assembly 100, for example the door handle 110, can comprise an actuator 207. The rod or lever 206 is for example connected to the activation element 13 and/or to the actuator 207, for example functionally connects the activation element 13 and the actuator 207.

If the power supply fails or there is any other problem with the handle, the emergency actuation can be activated, for example by pulling the handle 110. However, this is for example only possible when the blocking element 12 and the activation element 13 are in the emergency position. The rod/lever 206 can be provided for this purpose.

As soon as a failure occurs, the actuator 207 can for example actuate the rod 206 and the handle 110 can then be actuated manually. For this purpose, the actuator 207 can also have its own power supply, for example via supercapacitors, which supply the voltage to activate the actuator 207.

As soon as the handle is moved manually, the activation element 201 moves along the control cam 205 and thereby actuates the cable 203, for example so as to open the door panel.

The slots 113a, 113b can be designed, for example the ratio of the length of a first 113a of the slots and of the length of a second 113b of the slots is defined, so as to allow the rotation movement of the door handle structure 11 with respect to the support 10 and/or so as to allow a movement of the actuating element 201 of the door handle assembly 100, for example of the door handle 110, for example so that the actuating element 201 can cooperate with the activation lever 202, for example with a control cam 205 of the activation lever 202, for example so as to open the door panel 30.

The operation of the safety device 1 according to the invention is further described with reference to Figures 1 to 7, along with Figures 8 and 9 and Figures 12 to 16, which respectively depict the configuration of the blocking element 12 in the blocking position and in the emergency position.

In normal operation, the door handle structure 11 is locked by the blocking element 12. The activation element 13 is then in its non-active position.

The activation element 13 allows controlling the blocking element 12 by the cooperation of the blocking pin 12a of the blocking element 12 in cooperation with play in the oblong opening 13b of the activation element 13.

In the non-active position of the activation element 13, the blocking element 12 is in its blocking position in which the first and second longitudinal elements 124a, 124b of the blocking element 12 are engaged in cooperation both without play with the receiving means 103b1, 103b2 of the fixing bar 103 of the support 10 and also with the receiving means 113f1, 113f2 of the mobile plate 113 of the door handle structure 11. The elastic means, for example coil spring, 122 is in compression between the projection 121e of the blocking element 12 and the protrusion 102 of the support 10.

Thus, in the non-active position of the activation element 13 corresponding to the blocking position of the blocking element 12, the blocking element 12 prevents any movement of the door handle structure 11 relative to the support 10. It is noted that the blocking position of the blocking element 12 corresponds to a normal operating position, particularly when the vehicle is not involved in an accident.

In normal operation, the opening and/or closing and/or locking and/or unlocking of the door, in particular of the door latch, can be triggered through an automated way, for example in response to the user touching the handle as described hereabove.

In the event of a vehicle accident, the rod 206 connected to a notch 13c in the activation element 13 allows controlling the rotation of the activation element 13 around the activation pin 13a defining the activation axis A.

The stroke of the activation element 13 around the activation axis A can be limited by a ring 105 arranged around the means of fixation 104 of the support 10. More specifically, a recess 13d in the activation element 13 can be provided to cooperate with the ring 105 and thus stop the stroke of the activation element 13.

The cooperation of the recess 13d with the ring 105 can correspond to the active position of the activation element 13.

The play of the blocking pin 12a in the oblong opening 13b, in combination with the tilting of the activation element 13, causes the blocking pin 12a to slide in the oblong opening 13b, thereby guiding the first guiding means 121a, 121b of the blocking element 12 in the fastening lugs 101a, 101b of the support 10, so that the blocking element 12 moves in translation relative to the support 10 along the translation axis T to bring the blocking element 12 into its emergency position.

The translation of the blocking element 12 from its blocking position to its emergency position can cause disengagement, on the one hand, of the first longitudinal element 124a of the blocking element 12 from the receiving means 103b1, 103b2 of the fixing bar 103 of the support 10 and also from the receiving means 113f1, 113f2 of the mobile plate 113 of the door handle structure 11, and on the other hand, of the second longitudinal element 124b of the blocking element 12 from the receiving means 113f1, 113f2 of the mobile plate 113 of the door handle structure 11, while still keeping the second longitudinal element 124b engaged in the receiving means 103b1, 103b2 of the fixing bar 103 of the support 10.

The elastic means 122, for example the coil spring, in compression in the blocking position of the blocking element 12, can relax during the tilting of the blocking element 12 toward the emergency position, thus facilitating the disengagement of the first longitudinal element 124a and the second longitudinal element 124b of the blocking element 12.

Thus, in the active position of the activation element 13 corresponding to the emergency position of the blocking element 12, the blocking element 12 can release the movement of the door handle structure 11 relative to the support 10. It is noted that the emergency position of the blocking element 12 can correspond to an operating position in the event of a vehicle accident.

The door handle structure 11 can then be moved relative to the support 10. More specifically, now released from the blocking element 12, the mobile plate 113 of the door handle structure 11 can be rotated by sliding the second guiding means 113a, 113b, for example the guiding elements 113a, 113b relative to the guide pins 103e of the arms 103c, 103d of the fixing bar 103 of the support 10.

The curved shape of the second guiding means 113a, 113b, for example the guiding elements 113a, 113b can allow transforming the sliding movement of the mobile plate 113 relative to the guide pins 103e of the arms 103c, 103d of the fixing bar 103 of the support 10 into a rotational movement of the mobile plate 113 relative to the fixing bar 103 of the support 10.

In Figure 10, the vehicle door handle assembly 100, represented by its safety device 1, is shown mounted on the B-pillar 200 of vehicle door 400.

Although the invention has been described with reference to a particular embodiment, it should be understood that various modifications can be made without departing from the scope of the invention. Accordingly, the invention is not limited to the specific embodiment described, but encompasses all possible embodiments and modifications within the scope of the appended claims.

## Claims

1. Safety device (1) for a vehicle door handle assembly (100), the safety device (1) comprising:
- a support (10) configured to be fixed to a pillar (200) of a vehicle door (400),
- a door handle structure (11) configured to move with respect to the support (10) between a rest handle position and an active handle position allowing the opening of the door vehicle,
- a blocking element (12) configured to move with respect to the support (10) between a blocking position in which the blocking element (12) prevents the door handle structure (11) from moving with respect to the support (10), and an emergency position in which the blocking element (12) allows the door handle structure (11) to move with respect to the support (10) from the rest handle position to the active handle position, for example when the door handle structure (11) is subject to a pulling or pushing strain,
wherein the blocking element (12) comprises first guiding means (121a, 121b) configured to cooperate with complementary first guiding means (101) of the support (10) to allow a translation movement of the blocking element (12) with respect to the support (10) along a translation axis (T).

2. Safety device (1) for a vehicle door handle assembly (100) according to claim 1, wherein the blocking element (12) comprises at least one element, for example at least one longitudinal element (124a, 124b), for example a first longitudinal element (124a) and a second longitudinal element (124b), arranged to cooperate with the door handle structure (11) in the blocking position, for example only in the blocking position, to prevent the movement of the door handle structure (11) with respect to the support (10).

3. Safety device (1) for a vehicle door handle assembly (100) according to claim 2, wherein the at least one longitudinal element (124a, 124b) has a shape that tapers down to an end thereof.

4. Safety device (1) for a vehicle door handle assembly (100) according to any of claims 2 or 3, wherein the blocking element (12) comprises the first longitudinal element (124a) and the second longitudinal element (124b).

5. Safety device (1) for a vehicle door handle assembly (100) according to claim 4, wherein the support (10) comprises at least two portions (103b1', 103b2'), each portion (103b1', 103b2') having a surface extending in a plan (103b1', 103b2'), presenting receiving means (103b1, 103b2) each intended to cooperate with a respective of the longitudinal elements, the plans (103b1', 103b2') being different from each other.

6. Safety device (1) for a vehicle door handle assembly (100) according to any of the previous claims, wherein the safety device comprises an activation element (13) configured to activate the blocking element (12), and being moveable between a non-active position and an active position,
wherein the blocking element (12) is configured to cooperate with the activation element (13) so that when the activation element (13) moves from the non-active position to the active position, the blocking element (12) moves from the blocking position to the emergency position.

7. Safety device (1) for a vehicle door handle assembly (100) according to the previous claim, wherein the blocking element (12) comprises elastic means (122) cooperating with the support (10) to maintain the blocking element (12) in the blocking position when the activation element (13) is in the non-active position.

8. Safety device (1) for a vehicle door handle assembly (100) according to any of t claim 6 or 7, wherein the activation element (13) is configured to rotate around an activation axis (A), for example the activation axis (A) forming with the translation axis (T) an angle comprised between 70 and 110 degrees, for example 90 degrees.

9. Safety device (1) for a vehicle door handle assembly (100) according to any of the previous claims, wherein the door handle structure (11) comprises second guiding means (113a, 113b) configured to cooperate with complementary second guiding means of the support (10) to allow a rotation movement of the door handle structure (11) with respect to the support (10).

10. Safety device (1) for a vehicle door handle assembly (100) according to the previous claim, wherein the second guiding means (113a, 113b) of the door handle structure (11) comprise slots (113a, 113b) and the complementary second guiding means (103c, 103d) of the support (10) comprise guiding pins (103e), each guiding pin (103e) cooperating with one of the said slots (113a, 113b), for example each guiding pin (103e) extending at least partially within one of the said slots (113a, 113b).

11. Safety device (1) for a vehicle door handle assembly (100) according to the previous claim, wherein the support (10) comprises arms (103c, 103d), each arm (103c, 103d) supporting one of the said guiding pins (10e).

12. Safety device (1) for a vehicle door handle assembly (100) according to any of claims 10 to 11, wherein the elongated notches (113a, 113b) of the guiding elements (113a, 113b) have a curved shape.

13. Vehicle door handle assembly (100) comprising:
- the pillar (200) of the door vehicle and
- a safety device (1) according to any of the previous claims,
wherein the safety device (1) is attached to the pillar (200) of the vehicle door (400).

14. Vehicle door handle assembly (100) according to the previous claims, comprising a door handle (110), the door handle comprising the door handle structure (11) and sensing means, the sensing means comprising for example one or more sensor(s), the vehicle door handle assembly being configured such that detection of a hand of a user by the sensing means, for example of the hand of the user touching the door handle, triggers the opening and/or unlocking and/or locking of the door.

15. Vehicle (3) comprising at least one vehicle door handle assembly (100) according to any of claims 13 or 14.
